# EUROPEAN PATENT APPLICATION

(11) **EP 4 841 422 A1**
(43) Date of publication of application: **18.11.2026**
(21) Application number: 25177039.2
(22) Date of filing: 16.05.2025
(51) Int. Cl.: G06F 3/12

(54) **METHOD FOR PRINTING A TABLE PRINT ON A TABLE PRINTER**

(71) Applicant: Canon Production Printing Holding B.V., 5914 HH Venlo (NL)
(72) Inventor: GERRITS, Antonius M., Venlo (NL); SALDEN, Jan H.L., Venlo (NL); BASTEN, Paulus J.H., Venlo (NL); LEEUWERIK, Wilhelmus H.J., Venlo (NL); VAN VLIEMBERGEN, Eduardus J.W., Venlo (NL)
(74) Representative: Canon Production Printing IP Department

(57) **Abstract**

Method for printing images of print jobs on a table printer having a print engine, a user interface and a table with a plurality of alignment origins, each of the print jobs having print job data and print job settings, the method comprising the steps of automatically selecting a layout of a table print with an amount of alignment origins to be used and locations thereof on the table, the table print comprising images to be printed on media pieces which are intended to be simultaneously printed upon, automatically determining a use order of the at least one alignment origin, using the print job settings to determine which jobs are allowed to be printed on the table in the table print, automatically matching the amount of alignment origins in the use order with sizes of print media needed for printing images of the allowed print jobs and/or with sizes of the images of the allowed print jobs when the sizes of the print media are not available as a print job setting, the print controller providing instructions intended to be displayed on the user interface for placing the print media on the table in the use order of the amount of alignment origins, the user interface receiving a trigger that the print media are placed on the table according to the provided instructions, and the print controller instructing the print engine to print the images of the allowed print jobs on the print media placed on the table.

## Description

### FIELD OF THE INVENTION

The invention relates to a method for printing images of print jobs in a table print on a table printer having a print engine, a user interface and a table with a plurality of alignment origins, each of the print jobs having print job data and print job settings.

A table print is defined as a plan for printing of images on print media which are altogether placed on the table.

A layout of the table is also called a table layout.

### BACKGROUND OF THE INVENTION

When printing duplex rigids on flatbed printers and hybrid printers, the printing of the front and back of a rigid must happen while using the same physical origin of the rigid. This is needed to get a proper front back registration in case of e.g. rigids that are slightly different size than expected or a little slanted.

In many cases the operator has to solve this issue. For example, by means of a user interface of the printer guidance is provided to combine two print jobs into one batch job that asks to print the separate parts in different steps, which is actually not a real solution.

In other fields QR codes can be printed on one side of a media (front or back) that can be used to identify which printed media is inserted into a printer so the printer itself can decide which back image to print on what sheet (with what front) is fed through the system and in what orientation. However, this solution does not take into account printers that have multiple alignment originals such as flatbeds and hybrids. Said approach is extendable to flatbed printers and hybrid printers but needs a camera that somewhere between printing of the front and back can identify the QR code.

It is an object of the invention to provide a printer which achieves a simpler and cheaper solution to the problem stated here-above.

### SUMMARY OF THE INVENTION

According to the present invention this object is achieved by providing a printer according to claim 1. The method comprises the steps of a) automatically selecting a layout of a table with an amount of alignment origins to be used and locations thereof on the table, b) automatically determining a use order of the at least one alignment origin, c) using the print job settings to determine which jobs are allowed to be printed on the table in the table print, d) automatically matching the amount of alignment origins in the use order with sizes of print media needed for printing images of the allowed print jobs and/or with sizes of the images of the allowed print jobs when the sizes of the print media are not available as a print job setting, e) the print controller providing instructions intended to be displayed on the user interface for placing the print media on the table in the use order of the amount of alignment origins, f) the user interface receiving a trigger that the print media are placed on the table according to the provided instructions, and g) the print controller instructing the print engine to print the images of the allowed print jobs on the print media placed on the table.

The method starts with defining and/or selecting a layout for a table print: how many origins are used and where are they located. The printing system may have a default layout that is used when no specific one is defined. Another parameter is whether the printing system should use ping pong mode, i.e. actually half of the table is used for printing so the operator can load media on the other half of the table. It is foreseen that a user will often use the same lay-outs, so that in most cases he can just select one of the earlier defined lay-outs. Print jobs are received and scheduled. The printing system uses an algorithm in which order to use the origins and when to start a new table. The algorithm uses alignment parameters of jobs, the job media size or image size and how multi-image jobs are to be printed (collated/uncollated/table collated, simplex/duplex) and workflow settings that determine whether different jobs are allowed to be printed on one table, e.g. so that retrieving the end product of a first job does not need to wait until some part of a second job that would fit on the table too is also printed; or whether jobs that have overlap with other origins can be printed by just covering the origin, or not. The printing system then determines where the consecutive images need to be printed on the table and where media for the images needs to be placed (i.e. the table load; for a ping pong table load half of the table size is defined), taking into account the table layout and the specified job settings and capabilities of the engine to print media of different properties e.g. heights next to each other. For duplex printing the printing system will indicate which already printed boards need to be placed where and how on the table instead of just indicating where to put a rigid. The printing system may also determine the table load for consecutive tables (or do after printing a first table). If the next image no longer fits on the table, the printing can start. The printing system will print the table according to print strategy. A preferred print strategy is a most productive print strategy. The printing system decides e.g. if 2 boards with same media and media print mode can be printed with the same swaths of the printhead or not. After completion of printing the table, the printing system instructs the user to load a new table load according to new instructions.

The user only needs to think once how he wants to use the table. The printing system will provide instructions what to load for every table load. This allows to print many different jobs on the table in many ways without a need to define for each set of jobs what kind of batch must be created for them.

According to an embodiment the steps c) - g) are repeated as long as the print queue comprises images to be printed.

According to another embodiment the steps b) - f) are repeated as long as the print queue comprises images to be printed.

According to an embodiment the method comprises the steps of dividing the layout of the table print into table sections and the print controller providing instructions per table section. By doing so, one section of the table may printed with a different print mode than another section. Therefor multiple print modes are possible to be used for one table print. The alignment origins and its order may be defined per section or be taken from the corresponding ones for the integral original layout of the complete table print. The use of table sections may also be more productive when printing in one section can continue while the operator executes the instructions for placing the print media in another section.

According to an embodiment the method comprises a step of allocating a front image of a duplex job to a different occurrence of a table print than the back image of the same duplex job.

According to an embodiment the method comprises a step of allocating a front image of a duplex job to a different table section of the table print than the back image of the same duplex job.

According to an embodiment step c) comprises at least one of the sub-steps of using alignment parameters of the print jobs, a job media size or an image size, an indication how multi-image jobs are to be printed and at least one workflow setting that determines how print jobs and collection of print jobs are allowed to be printed on one table.

According to an embodiment allowed prints on one table have the same print mode, a same media type, a same media size or a same media thickness.

The present invention also relates to a table printer having a user interface for user interaction, a table with a plurality of alignment origins for placing media pieces to be printed upon, a print controller for receiving print jobs having print job data and print job settings, wherein the print controller is configured to receive the print jobs, to automatically select a layout of a table print with an amount of alignment origins to be used and locations thereof on the table, to automatically determine a use order of the at least one alignment origin, to use the print job settings to determine which jobs are allowed to be printed on the table in the table print, to automatically match the amount of alignment origins in the use order with sizes of print media needed for printing images of the allowed print jobs and/or with sizes of the images of the allowed print jobs when the sizes of the print media are not available as a print job setting, to provide instructions on the user interface for placing the print media on the table in the use order of the amount of alignment origins, to receive a trigger by means of the user interface that the print media are placed on the table according to the provided instructions, and to instruct the print engine to print the images of the allowed print jobs on the print media placed on the table.

The present invention also relates to a recording medium comprising computer executable program code configured to instruct a print controller of a table printer to perform the steps of the method according to the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

Hereinafter the present invention is further elucidated with references to the appended drawings showing non-limiting embodiments and wherein:
- Fig. 1: shows a printing system according to the present invention;
- Fig. 2: is a top view of a larger flatbed area than the flatbed area shown in Fig. 1;
- Figs. 3A - 12B: are schematic drawings of table layouts and table prints according to the present invention;
- Fig. 13: is a flowchart of an embodiment of the method according to the present invention; and
- Fig. 14: is a schematic diagram of a non-transitory recording medium according to the present invention.

### DETAILED DESCRIPTION OF EMBODIMENTS

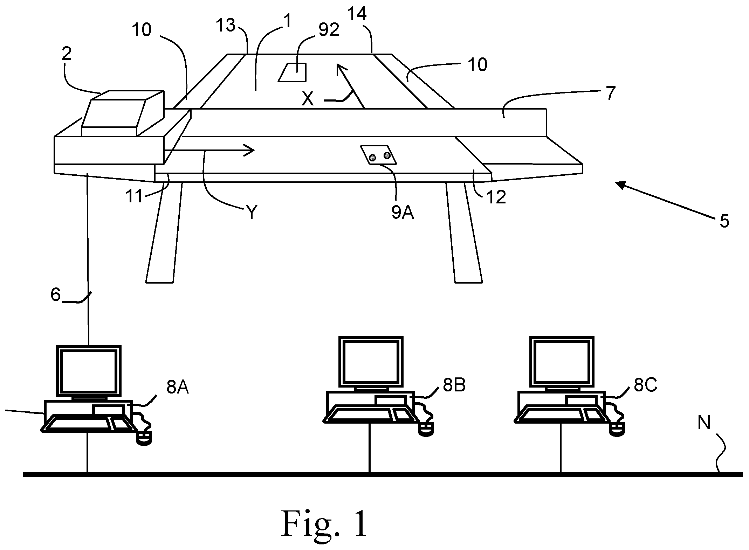

Fig. 1 shows an example of a printing system according to the present invention. The printing system 5 comprises a number of workstations 8B, 8C, which may be personal computers or other devices for preparing image data for prints to be printed. These workstations have access to a network N for transferring print jobs comprising the image data to a print controller 8A that is configured to receive the print jobs for prints and derive pass images. The print controller 8A may be part of the print system 5 via a connection 6. The print system 5 further comprises a print head 2 attached to an armature 7 for applying colorants, for example cyan (C), magenta (M), yellow (Y), black (K) and white (W) colorant, or varnish to a flat media piece 9A placed on a flatbed area 1 in order to obtain a printed image. The armature 7 may be a gantry above the flatbed area 1 as shown in Fig. 1 or a robot arm (not shown) moving in a plurality of directions over the flatbed area 1. The flatbed area 1 is the surface of the flatbed which is at least partially printable by the print head 2. The pieces of media may be so small that they are completely placed on the flatbed area 1, but a piece of media which is larger than the flatbed area, in which case an image which is going to cover the whole piece of media must be printed into a plurality of parts of the image, is not excluded. A first piece 9A has already been printed upon, while another piece 92 is not provided with any recording material yet. The print head 2 reciprocally scans the flatbed area 1 in the second direction Y along a gantry 7 perpendicular to a first direction X of the gantry 7 over the flatbed area 1 along guiding parts 10. During printing of an image on the piece 9A of media the piece 92, 9A of media is not moved on the flatbed area 1. This way of working is advantageous for rigid print media. A print head which is as wide as the flatbed area may also be envisaged within the scope of the invention. Such a print head may be moveable in at least one direction over the flatbed area 1. The piece of media 9A may have a thickness of 10 mm, while the piece of media 92 may have a thickness of 20 mm.

The flatbed area 1 has a rectangular surface with four alignment origins 11 - 14 for placing and aligning a print medium to be printed upon. A print medium may be aligned in one of the corners 11 - 14 of the flatbed area 1. At the same time multiple print media may be aligned in multiple corners 11 - 14 of the flatbed area 1 to increase a productivity of the printer.

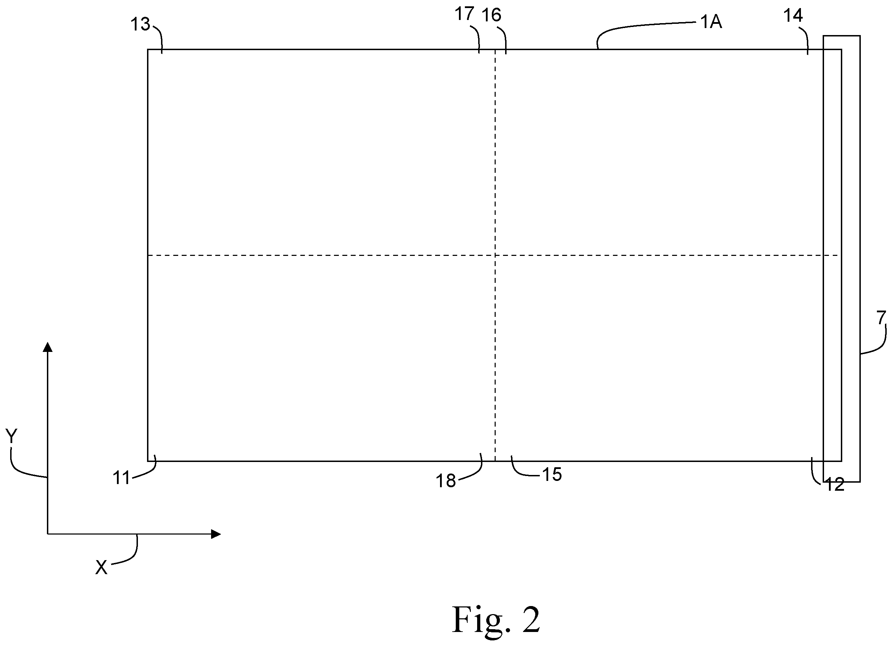

Fig. 2 is a top view of a larger flatbed area 1A than the flatbed area 1 shown in Fig. 1. At one side of the flat bed area 1A the armature 7 resides when printing is paused, for example due to print head maintenance or when a print job has ended. The flatbed area 1A has a rectangular surface with eight alignment origins 11 - 18 for placing and aligning a print medium to be printed upon. In the middle of each long side of the flatbed area 1A in the X direction there are two more alignment origins 15 - 18. which represent the numbers five (5), six (6), seven (7) and eight (8) respectively. According to the present invention a front side of a media piece may be aligned in the alignment origin 11. When the media piece is turned over to the other half of the table the back side of the media piece may be aligned in the alignment origin 14.

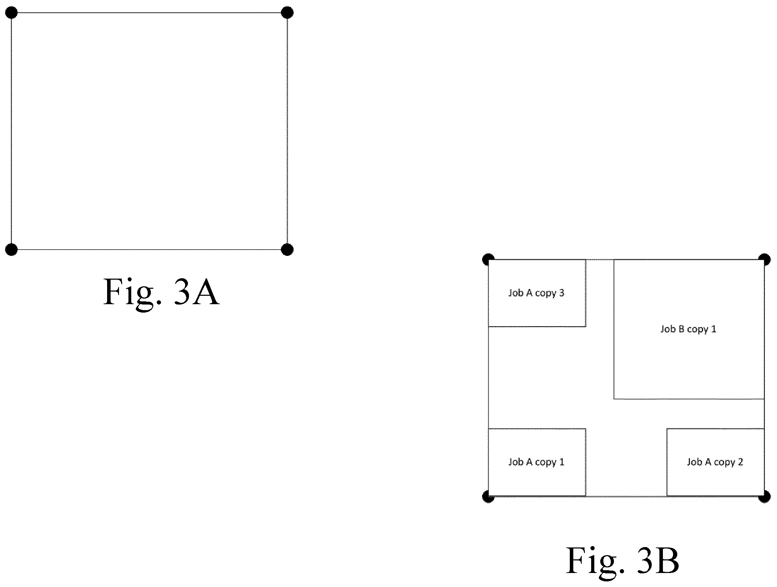

Figs. 3A - 12B are examples of schematic table layouts and table prints according to the present invention. Figs. 3A - 12B illustrate how a use order of the at least one alignment origin is determined, how to use the print job settings to determine which jobs are allowed to be printed on the table in the table print, how to automatically match the amount of alignment origins in the use order with sizes of print media needed for printing images of the allowed print jobs and/or with sizes of the images of the allowed print jobs when the sizes of the print media are not available as a print job setting, and how to automatically determine a use order of the at least one alignment origin.

Fig. 3A shows a table layout wherein the table layout is indicated by black dots. In this example two print jobs are scheduled to be printed which both have no strict alignment demands. A first Job A needs 3 copies on a print medium A'. A second job B needs 2 copies on a print medium B'. The medium A' and the medium B' have a same height in a direction perpendicular to the plane of the drawing of Fig. 3A, but a different size in width en length. It is preferred to have print media of the same height in a table layout in order to avoid print head touches with the print media while printing on the print media.

Fig. 3B shows a first table load for job A and job B. The first table load comprises 3 copies of job A and 1 copy of job B. Since not all copies of jobs A and B can be printed on one table, a second table load is needed.

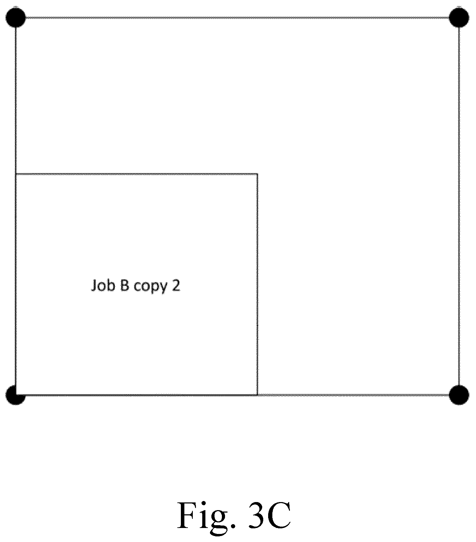

Fig. 3C shows a second table load for the second and last copy of job B.

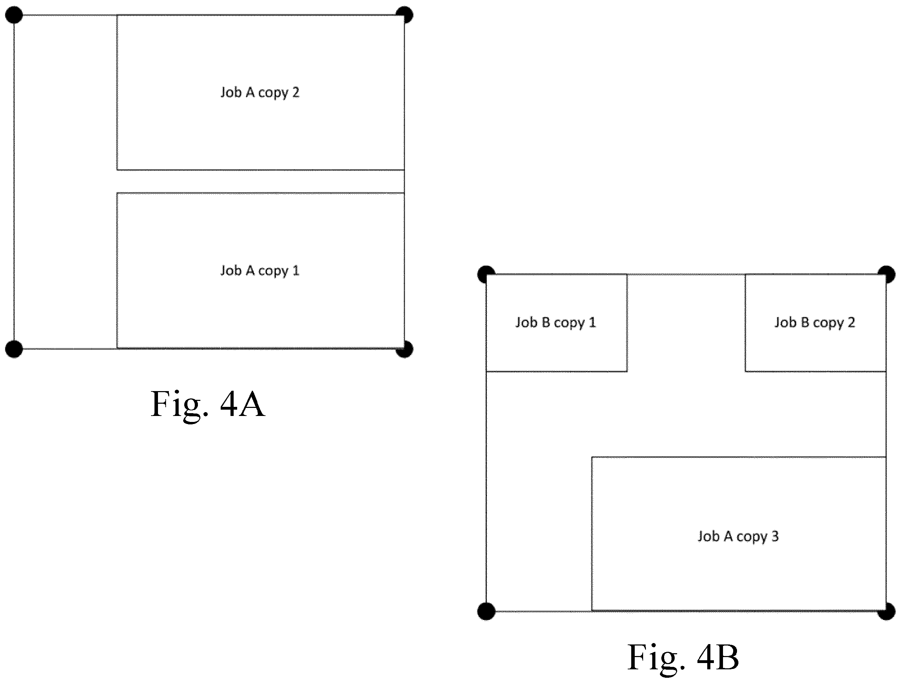

Fig. 4A shows a first table load for other jobs A and B. Job A needs 3 copies on a medium A' which is large and should be right aligned. Job B needs 2 copies on a medium B' which has a smaller size than medium A'.

The first table load shown in Fig. 4A comprises 2 right aligned copies of job A.

Fig. 4B shows a second table load comprising 2 copies of job B and a third right aligned copy of job A.

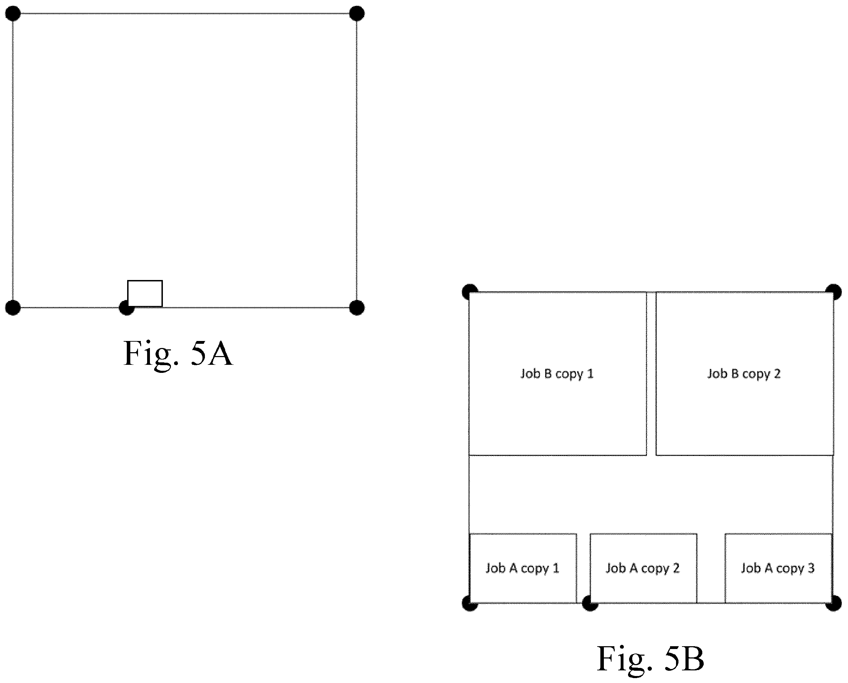

Fig. 5A shows another table layout wherein the alignment origins are again indicated with black dots. Fig. 5A shows 5 alignment origins, i.e. 4 alignment origins in the corners of the table and one extra left aligned origin. Table loads for other jobs A and B are created. Job A needs 3 copies on a print medium A'. Job B needs 2 copies on a print medium B' having a same height as and a different size than print medium A'. Both jobs A and B do not have strict alignment demands.

Fig. 5B shows a first table load for the jobs A and B comprising 3 copies of job A and 2 copies of job B. By doing so, the jobs A and B can be printed in one table load.

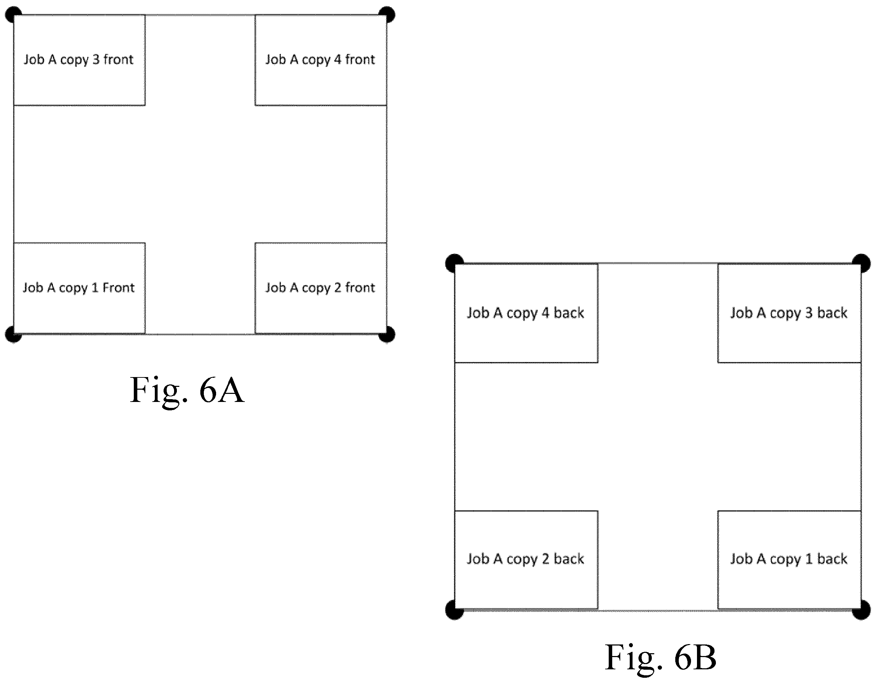

Figs. 6A - 6D show table loads for another job A. Starting point is again the table layout shown in Fig. 3A. Job A has 2 pages, i.e. one front side and one back side. Job A needs 5 copies on a print medium A' and should be flipped on the short edge of the print medium A'.

For job A more than one table load instruction is needed.

Fig. 6A shows a first table load instruction comprising 4 front copies of job A in the 4 corners of the table. Fig. 6B shows a second table load instruction comprising 4 back copies of job A in the 4 corners of the table. A front copy in Fig. 6A is placed and aligned in another corner than the corresponding back copy in Fig. 6B. This is a productive way of working, since the copies can be flipped over on the short edge of the print medium A' from one side of the table to the other side of the table.

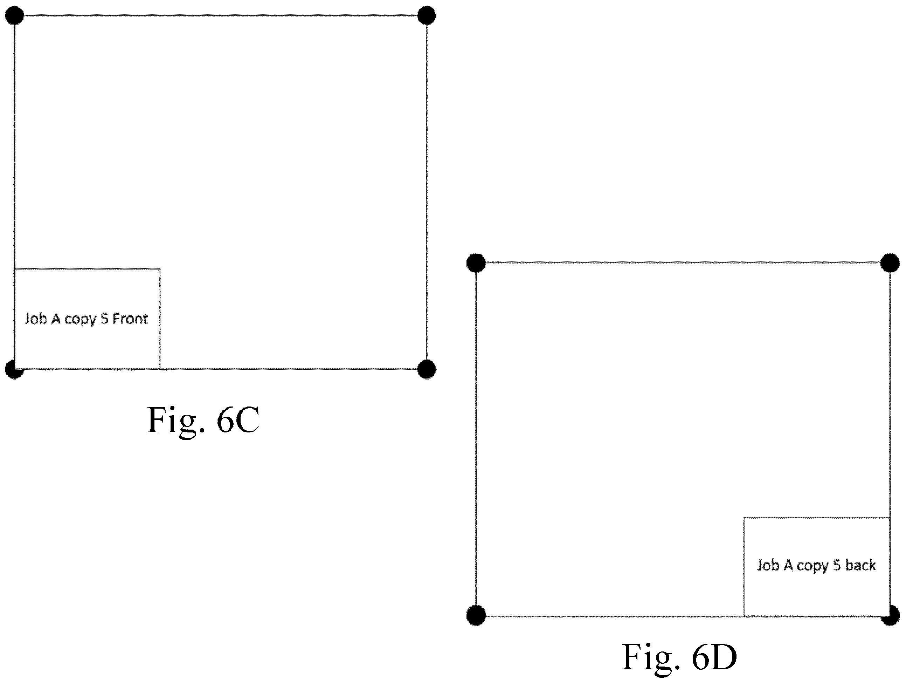

Fig. 6C shows a third table load instruction comprising 1 last front copy of job A in the lower left corner of the table. Fig. 6D shows a fourth table load instruction comprising 1 last back copy of job A in the lower right corner of the table. The front copy in Fig. 6C is placed and aligned in another corner than the corresponding back copy in Fig. 6D. This is a productive way of working, since the copy can be flipped over on the short edge of the print medium A' from one side of the table to the other side of the table.

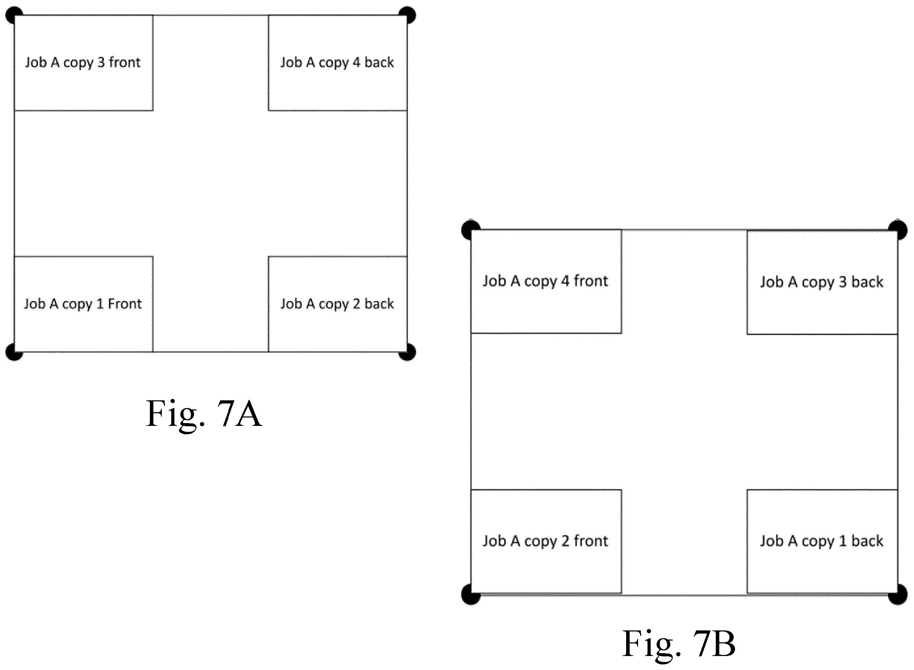

Figs. 7A - 7D show table loads for the same job A. Starting point is again the table layout shown in Fig. 3A. Job A has 2 pages, i.e. one front side and one back side. Job A needs 5 copies on a print medium A' and should be flipped on the short edge of the print medium A'.

For job A more than one table load instruction is needed.

Fig. 7A shows a first table load instruction comprising 2 front copies of job A and 2 back copies of job A in the 4 corners of the table. Fig. 7B shows a second table load instruction comprising again 2 front copies of job A and 2 back copies of job A in the 4 corners of the table. A front copy in Fig. 7A is placed and aligned in another corner than the corresponding back copy in Fig. 7B. A back copy in Fig. 7A is placed and aligned in another corner than the corresponding front copy in Fig. 7B. This is a productive way of working, since the copies can be flipped over on the short edge of the print medium A' from one side of the table to the other side of the table.

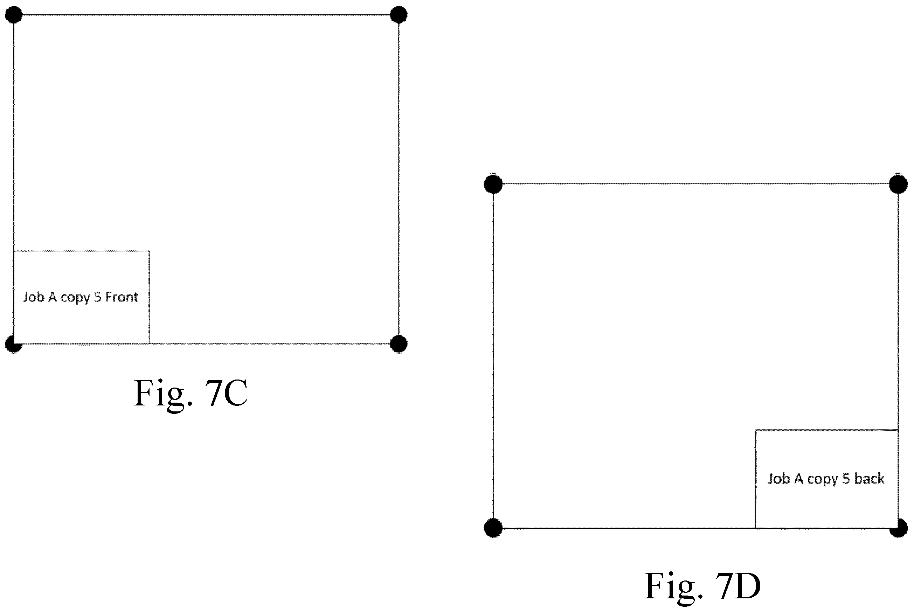

Fig. 7C shows a third table load instruction comprising 1 last front copy of job A in the lower left corner of the table. Fig. 7D shows a fourth table load instruction comprising 1 last back copy of job A in the lower right corner of the table. The front copy in Fig. 7C is placed and aligned in another corner than the corresponding back copy in Fig. 7D. This is a productive way of working, since the copy can be flipped over on the short edge of the print medium A' from one side of the table to the other side of the table.

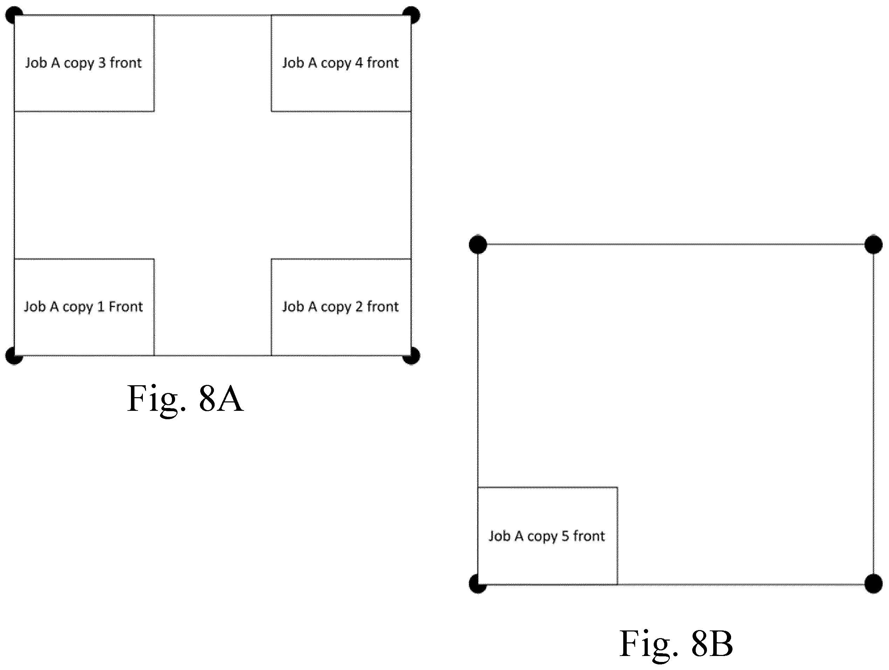

Figs. 8A - 8D show table loads for the same job A. However, now job A is a real duplex job, i.e. first all front sides should be printed and then all back sides should be printed. Starting point is again the table layout shown in Fig. 3A. Job A has 2 pages, i.e. one front side and one back side. Job A needs 5 copies on a print medium A' and should be flipped on the short edge of the print medium A'.

For job A more than one table load instruction is needed.

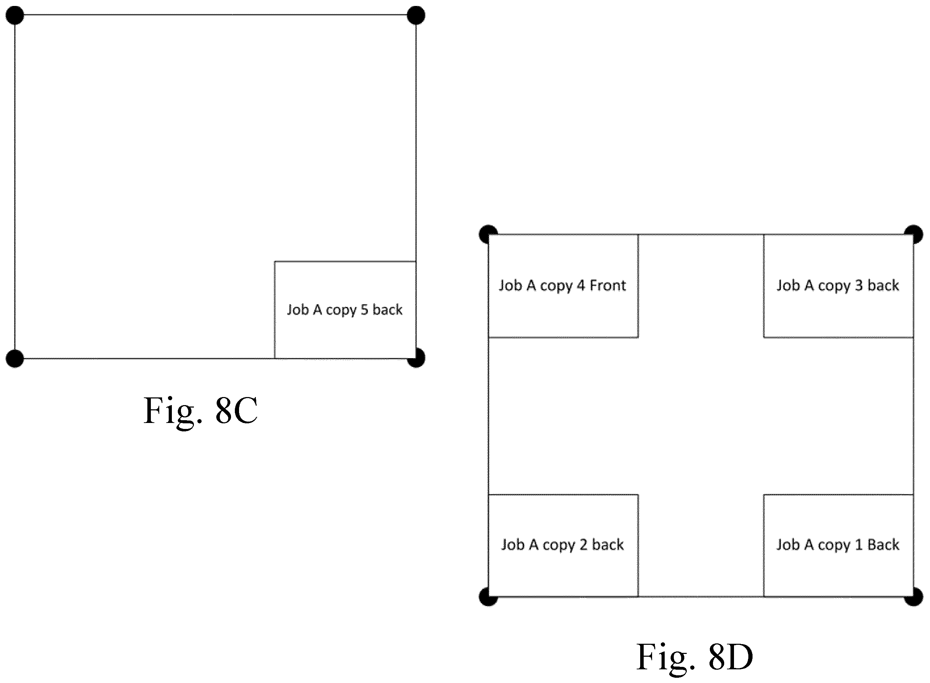

Fig. 8A shows a first table load instruction comprising 4 front copies of job A in the 4 corners of the table. Fig. 8B shows a second table load instruction comprising the last and fifth front copy of job A in the lower left corner of the table. Fig. 8C shows a third table load instruction comprising the last and fifth back copy of job A in the lower right corner of the table. By doing so, the fifth copy needs only be once carried to the table. Fig. 8D shows a fourth table load instruction comprising 4 back copies of job A in the 4 corners of the table corresponding to the 4 front copies of Job A shown in Fig. 8A. A front copy in Fig. 8A is placed and aligned in another corner than the corresponding back copy in Fig. 8D. This is a productive way of working, since the copies can be flipped over on the short edge of the print medium A' from one side of the table to the other side of the table.

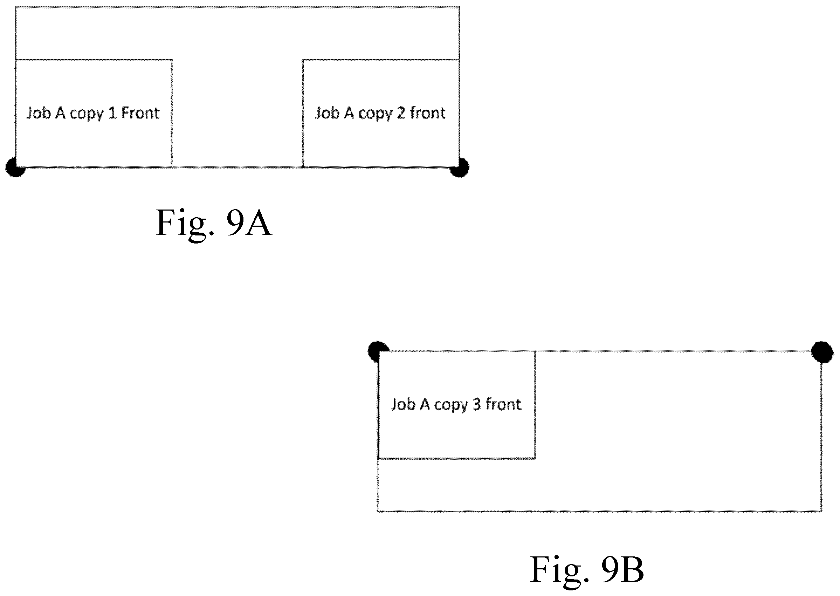

Figs. 9A - 9C show table loads for another job A. Job A is a real duplex job, i.e. first all front sides should be printed and then all back sides should be printed. However, for job A a ping pong mode is requested, i.e. in a first instance one half of the table can be used to place and align print media, while on the other half of the table printing is going on. Starting point is again the table layout shown in Fig. 3A. Job A has 2 pages, i.e. one front side and one back side. Job A needs 3 copies on a print medium A' and should be flipped on the short edge of the print medium A'.

For job A more than one table load instruction is needed.

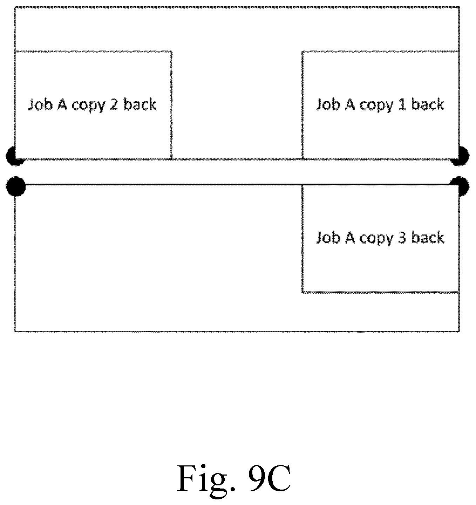

Fig. 9A shows a first table load instruction comprising 2 front copies of job A in the 2 corners of a first half of the table. Fig. 9B shows a second table load instruction comprising the third front copy of job A in an upper left corner of a second half of the table. Fig. 9C shows a third table load instruction comprising all 3 back copies of job A in the corners of both halves of the table.

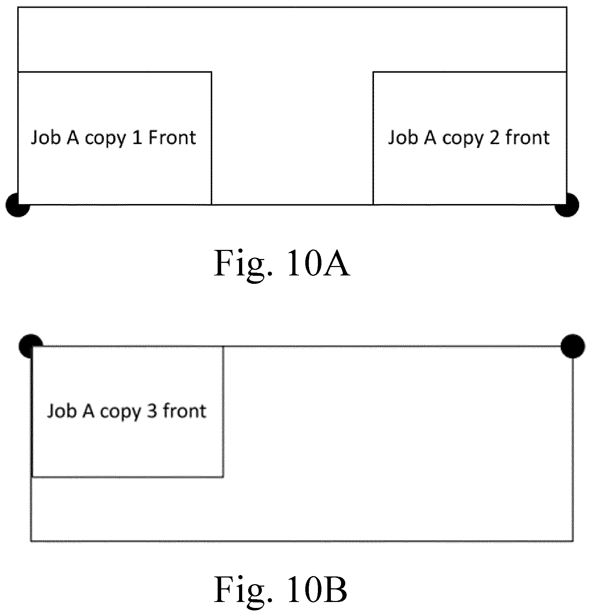

Figs. 10A - 10C show table loads for another job A. Job A is a real duplex job, i.e. first all front sides should be printed and then all back sides should be printed. However, for job A a ping pong mode is requested, i.e. in a first instance one half of the table can be used to place and align print media, while on the other half of the table printing is going on. Starting point is again the table layout shown in Fig. 3A. Job A has 2 pages, i.e. one front side and one back side. Job A needs 3 copies on a print medium A' and should be flipped on the long edge of the print medium A'.

For job A more than one table load instruction is needed.

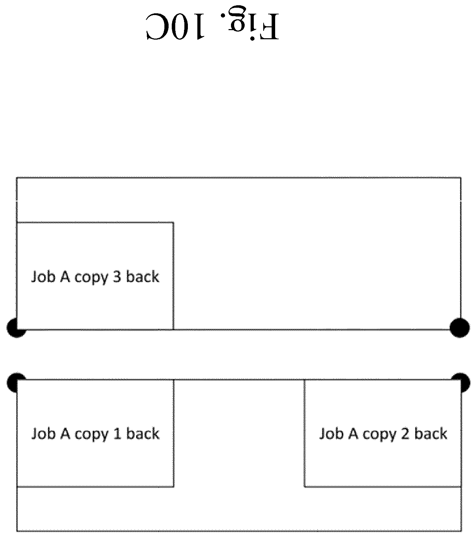

Fig. 10A shows a first table load instruction comprising 2 front copies of job A in the 2 corners of a first half of the table. Fig. 10B shows a second table load instruction comprising the third front copy of job A in an upper left corner of a second half of the table. Fig. 10C shows a third table load instruction comprising all 3 back copies of job A in the corners of both halves of the table. The positions of the 3 back copies is achieved by flipping the 3 front copies over the long edge of the print medium A'.

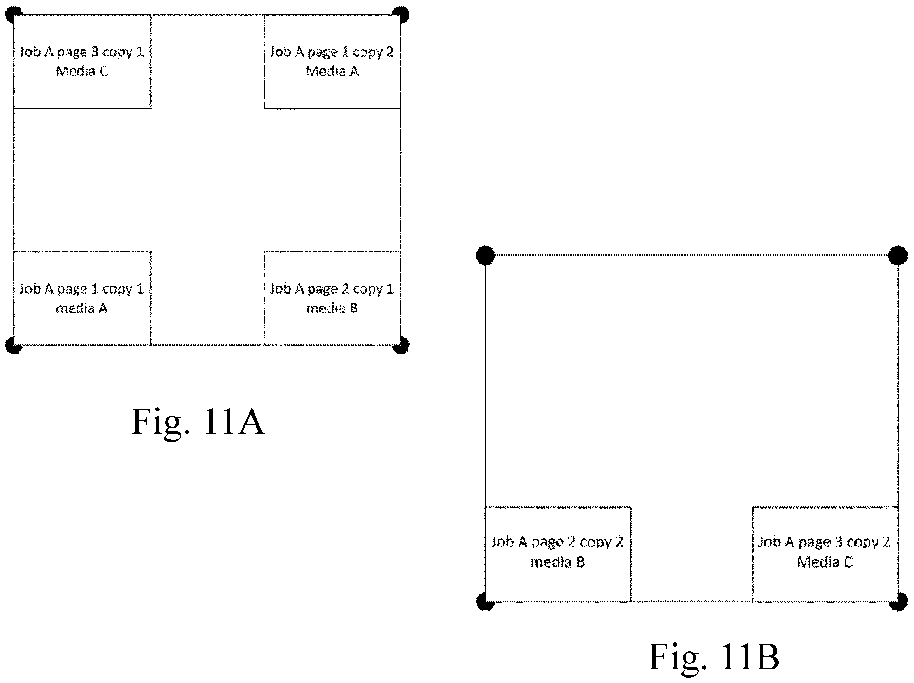

Figs. 11A - 11B show table loads for another simplex job A. Starting point is again the table layout shown in Fig. 3A. Job A has 3 pages and needs 2 copies on a print medium A' for the first page, a print medium B' for the second page and a print medium C' for the third page.

For job A more than one table load instruction is needed.

Fig. 11A shows a first table load instruction comprising 3 pages of the first copy on 3 different media and 1 page of the second copy in 4 corners of the table. Fig. 11B shows a second table load instruction comprising the 2 remaining pages of the second copy of job A.

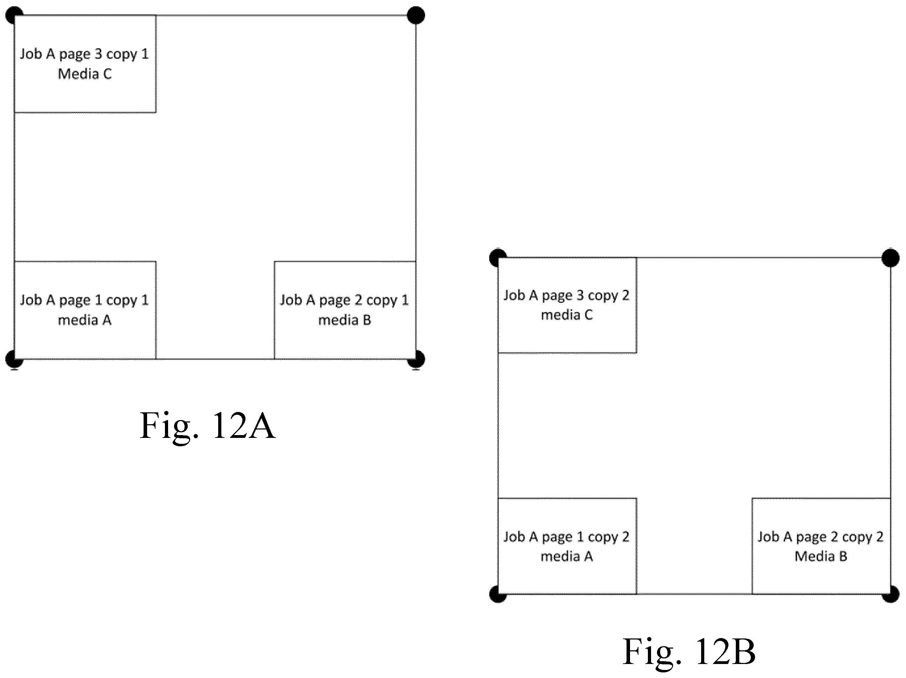

Figs. 12A - 12B show table loads for another simplex job A. Starting point is again the table layout shown in Fig. 3A. Job A has 3 pages and needs 2 copies on a print medium A' for the first page, a print medium B' for the second page and a print medium C' for the third page.

For job A more than one table load instruction is needed.

Fig. 12A shows a first table load instruction comprising 3 pages of the first copy on 3 different media in 3 corners of the table. Fig. 12B shows a second table load instruction comprising the 3 pages of the second copy of job A.

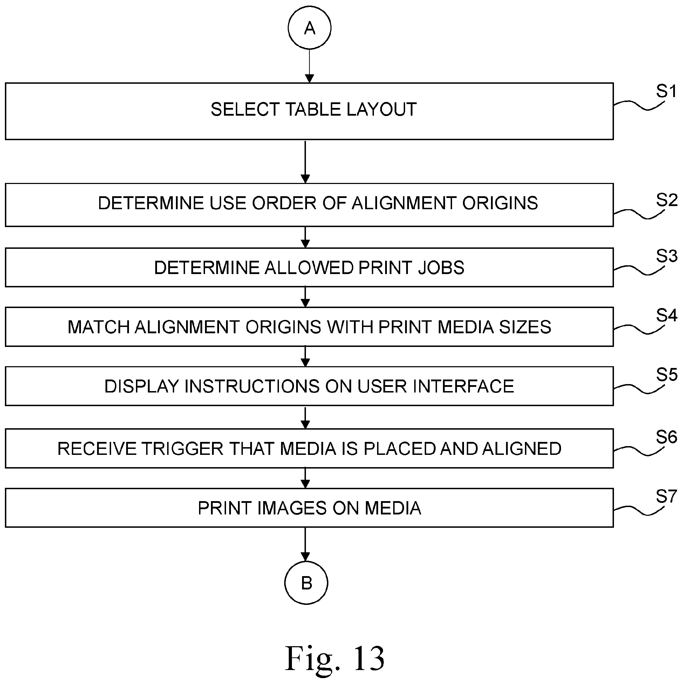

Fig. 13 is a flowchart of an embodiment of the method according to the present invention. The method is suitable for printing images of print jobs on a table printer having a print engine, a user interface and a table with a plurality of alignment origins.

Each of the print jobs has print job data like digital images and print job settings.

Starting point of the method is point A. Point A leads to a first step S1.

In the first step S1 a layout of a table print with an amount of alignment origins is automatically selected to be used and locations thereof on the table. The table print comprising images to be printed on media pieces which are intended to be simultaneously printed upon.

In a second step S2 automatically a use order of the at least one alignment origin is determined.

In a third step S3 the print job settings are used to determine which jobs are allowed to be printed on the table in the table print.

In a fourth step S4 the amount of alignment origins in the use order is automatically matched with sizes of print media needed for printing images of the allowed print jobs and/or with sizes of the images of the allowed print jobs when the sizes of the print media are not available as a print job setting.

In a fifth step S5 the print controller provides instructions intended to be displayed on the user interface for placing the print media on the table in the use order of the amount of alignment origins.

In a sixth step S6 the user interface receives a trigger that the print media are placed on the table according to the provided instructions.

In a seventh step S7 the print controller instructs the print engine to print the images of the allowed print jobs on the print media placed on the table.

The method ends in an end point B.

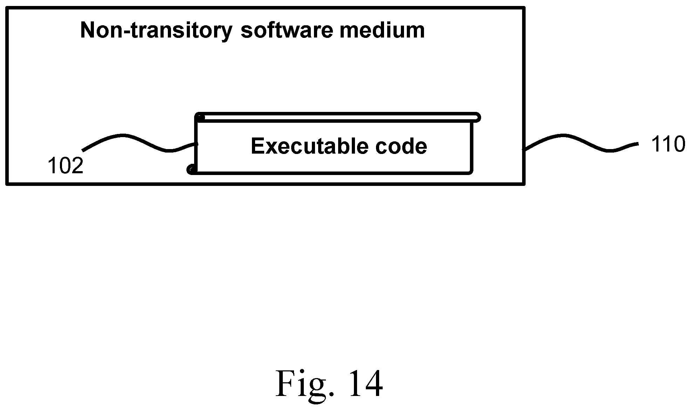

Fig. 14 schematically shows a non-transitory software medium 110 according to the invention. The software medium 110 comprises executable code 102 configured to, when executed, perform the method according to the invention, e.g. as described with respect to either the printer shown in Fig. 1 or the method shown in Fig. 13 and/or according to any of the variants and modifications of the printer and/or of the method described hereinbefore.

The non-transitory software medium 110 may, specifically, be formed as a CD or a CD-ROM, a DVD or a DVD-ROM, a Blu Ray disc or a Blu Ray-ROM disc, a magnetic hard drive, a solid state disk (SSD) hard drive, a USB memory device and so on.

The above disclosure is intended as merely exemplary, and not to limit the scope of the invention, which is to be determined by reference to the following claims.

## Claims

1. Method for printing images of print jobs in a table print on a table printer having a print engine, a user interface and a table with a plurality of alignment origins, each of the print jobs having print job data and print job settings and the table print comprising images to be printed on media pieces which are intended to be altogether printed upon, the method comprising the steps of
a) automatically selecting a layout of the table with an amount of alignment origins to be used and locations thereof on the table,
b) automatically determining a use order of the at least one alignment origin,
c) using the print job settings to determine which jobs are allowed to be printed on the table in the table print,
d) automatically matching the amount of alignment origins in the use order with sizes of print media needed for printing images of the allowed print jobs and/or with sizes of the images of the allowed print jobs when the sizes of the print media are not available as a print job setting,
e) the print controller providing instructions intended to be displayed on the user interface for placing the print media on the table in the use order of the amount of alignment origins,
f) the user interface receiving a trigger that the print media are placed on the table according to the provided instructions, and
g) the print controller instructing the print engine to print the images of the allowed print jobs on the print media placed on the table.

2. Method according to claim 1, wherein the steps c) - g) are repeated as long as the print queue comprises images to be printed.

3. Method according to claim 1, wherein the steps b) - g) are repeated as long as the print queue comprises images to be printed.

4. Method according to any of the preceding claims, wherein the method comprises the steps of dividing the table layout into table sections and the print controller providing instructions per table section.

5. Method according to claim 2, wherein the method comprises a step of allocating a front image of a duplex job to a different occurrence of a table print than the back image of the same duplex job.

6. Method according to claim 4, wherein the method comprises a step of allocating a front image of a duplex job to a different table section of the table print than the back image of the same duplex job.

7. Method according to any of the preceding claims, wherein step c) comprises at least one of the sub-steps of using alignment parameters of the print jobs, a job media size or an image size, an indication how multi-image jobs are to be printed and at least one workflow setting that determines how print jobs and collection of print jobs are allowed to be printed on one table.

8. Method according to any of the preceding claims, wherein allowed prints on one table have the same print mode, a same media type, a same media size or a same media thickness.

9. A table printer having a user interface for user interaction, a table with a plurality of alignment origins for placing media pieces to be printed upon in a table print, a print controller for receiving print jobs having print job data and print job settings, wherein the print controller is configured to receive the print jobs, to automatically select a layout of the table with an amount of alignment origins to be used and locations thereof on the table, to automatically determine a use order of the at least one alignment origin,
to use the print job settings to determine which jobs are allowed to be printed on the table in the table print, to automatically match the amount of alignment origins in the use order with sizes of print media needed for printing images of the allowed print jobs and/or with sizes of the images of the allowed print jobs when the sizes of the print media are not available as a print job setting, to provide instructions on the user interface for placing the print media on the table in the use order of the amount of alignment origins, to receive a trigger by means of the user interface that the print media are placed on the table according to the provided instructions, and to instruct the print engine to print the images of the allowed print jobs on the print media placed on the table.

10. Recording medium comprising computer executable program code configured to instruct a print controller of a table printer to perform the method according to any of the claims 1 - 8.
